# EUROPEAN PATENT APPLICATION

(11) **EP 2 009 768 A2**
(43) Date of publication of application: **31.12.2008**
(21) Application number: 08252081.8
(22) Date of filing: 17.06.2008
(51) Int. Cl.: H02K 3/14, H02K 15/04

(54) **Rotation electric machine having a wave winding coil with cranked crossover conductor, distributed winding stator, and method and apparatus for forming same**

(30) Priority: 29.06.2007 JP 2007172098
(71) Applicant: Hitachi Ltd., Chiyoda-ku Tokyo 100-8280 (JP)
(72) Inventor: Naganawa, Takashi, Tokyo 100-8220 (JP); Ishigami, Takashi, Tokyo 100-8220 (JP); Hiramatsu, Hiromichi, Tokyo 100-8220 (JP); Tanaka, Yuichiro, Tokyo 100-8220 (JP)
(74) Representative: Paget, Hugh Charles Edward

(57) **Abstract**

The invention provides a distributed winding stator using a rectangle conductor as coil, realizing a miniaturized coil end and reduced current density compared to the prior art stator, so as to obtain a miniaturized rotation electric machine with high power. The distributed winding stator is formed by wave winding a conductor source wire having a rectangular cross-section, wherein the wire is cranked so that parietal regions on both ends are displaced corresponding to the width of the source wire and that the length is within the range of intervals between adjacent slots, and inserting the wave winding coil into slots of the stator.

## Description

### BACKGROUND OF THE INVENTION

### Field of the invention

The present invention relates to rotation electric machines such as motors and power generators, distributed winding stators and the method and apparatus for forming the same.

### Description of the related art

Winding wire patterns of a stator include concentrated winding in which the coil is wound in a concentrated manner on every pole tooth, and distributed winding in which the coil is wound across a plurality of slots and having coils of different phases or of the same phase overlap at coil ends. The concentrated winding stator has smaller coil ends, which is advantageous in miniaturizing and improving the efficiency of a rotation electric machine. On the other hand, the distributed winding stator can approximate a rotating-field of the inner circumference of the stator to sine waves, and realize higher power than the concentratedwindingwith little noise. Further, one method for achieving higher power in both winding patterns is to use a wire with a rectangular cross-section as the source wire of the coil and increase the coil lamination factor within the stator slots. The present invention is related to rotation electric machines having distributed winding stator coils formed of wires having a rectangular cross-section.

Japanese patent No. 3823555 (patent document 1) discloses a three-phase start coil in which the coil conductor of each phase is formed by wave winding, wherein the longitudinal side surface of flat rectangular conductors is opposed to the circumferential side of the stator slot.

Japanese patent application laid-open publication No. 2004-350381 (patent document 2) also discloses a wave winding coil, wherein the longitudinal side surface of flat rectangular conductors is opposed to the circumferential side of the stator slot.

Japanese patent application laid-open publication No. 2001-161050 (patent document 3) discloses bending flat rectangular conductors so that the surface of the longitudinal sides thereof opposes to the radial direction surface of the stator slots, inserting the bent conductors from the axial direction end face of the stator core into slots, and electrically connecting the open ends of the rectangular conductor portions protruded from the opposite end surface of the stator core so as to constitute a wave winding electric circuit. The rectangular conductors are substantially U-shaped, wherein the short side surfaces of the rectangular cross-section thereof are arranged in the same direction.

According to the prior arts mentioned above, the distributed winding stators adopting flat rectangular conductors have conductors arranged in the radial direction with a small number of partitions in the stator slots, whereas the distributed winding stators adopting square or rectangular conductors with the same or close vertical and horizontal lengths have parietal portions of the conductor constituting the coil ends protruded.

Further, Japanese patent application laid-open publication No. 2003-018778 (patent document 4) discloses forming flat rectangular conductors into U-shapes and inserting the same to the slots of a stator core, bending both ends thereof, and connecting the ends with the ends of other adjacent U-shaped conductor segments to form a single electric conductor source wire to thereby form a stator winding. According to this arrangement, the stator core end surfaces are separated into a parietal region side and a connection side, wherein a large number of connections are formed on the connection side.

The present invention aims at providing a coil shape of a distributed winding stator and the method of forming the same for obtaining a miniaturized rotation electric machine realizing high power and high effectiveness.

Regarding higher power, the power output of the rotation electric machine is substantially determined by the number and shape of the slots of the stator core and the area within the slots occupied by the conductors. Therefore, the object of the invention is to realize higher lamination factor of conductors within the slots.

Regarding miniaturization, since the size of the stator core of the distributed winding stator is fixed, the coil ends on both ends of the stator core must be minimized so as to realize a miniaturized rotation electric machine. A significant miniaturization effect is realized by shortening the ends for even one or two mm in the axial direction. The conductors disclosed in patent document 1 constitute wave winding coils in which the flat rectangular coil surfaces are bent without inverting the same, so a height corresponding at least to the longitudinal side of the rectangular cross-section is required. The present invention aims at reviewing such prior art bending and forming method of conductors and to achieve a formed coil type with smaller parietal regions.

Regarding higher effectiveness, the current density must be reduced and the copper loss must also be reduced. The conductor disclosed in patent document 1 is a segment coil type conductor in which the flat square wire is bent substantially into U-shapes, and two conductors are inserted into a single slot in the radial direction. The present invention aims at providing an arrangement in which the conductors arranged in a single slot is radially segmentalized, and the current density is reduced.

Furthermore, patent document 4 discloses an arrangement with a large number of connections. The present invention aims at providing an arrangement having a small number of connections and reduced copper loss.

### SUMMARY OF THE INVENTION

The object of the present invention is to provide a coil shape and a method for forming the same having solved the three problems of the prior art mentioned above.

The present invention provides a rotation electric machine having a stator, wherein a coil conductor having phases including a slot conductor portion composed of an outward conductor portion and a homeward conductor portion alternately inserted to respective slots of the core and a crossover conductor portion where a same side end portion of the outward conductor portion and the homeward conductor portion continuously constitute a coil end is subjected to wave winding, and wherein cranked portions are formed at substantial parietal regions of the crossover conductor portion.

Moreover, conductors having a rectangular cross-section with insulation coatings are used to constitute the coil, by which the lamination factor of conductors in slots are improved. Further, the square conductors are arranged in a segmentalized manner in the radial direction in the stator slots, by which the current density is reduced. The rectangular conductor is formed into a wave winding shape composed of outward conductors and homeward conductors inserted alternately into respective slots of the core, by which the number of connections of the conductor terminals is cut down and the copper loss is reduced. The parietal portions on both ends of the wave winding rectangular conductors are displaced from each other for a distance corresponding to the total width of the source wire and are cranked within the range of the interval between adjacent stator slots, by which the coil ends are downsized. The portions of the formed coil corresponding to the stator slots are covered with insulation material and are assembled to all the slots of the stator, the wave winding coils are aligned at both coil ends of the stator, and the coil terminals are connected.

The present invention enables to provide a distributed winding stator using coils formed by winding conductors having a rectangular cross-section in a continuous waveform, according to which the number of terminals of the coils is reduced compared to the prior art. Thereby, the reliability of production can be enhanced while taking advantages of the distributed winding stator having superior rotational characteristics.

### BRIEF DESCRIPTION OF THE DRAWINGS

FIG. 1A is a front view of a distributed winding stator according to embodiment 1 of the present invention, and FIG. 1B is a cross-sectional view thereof;
FIG. 2A is a plan view illustrating the distributed winding stator from the side with the terminals and FIG. 2B is a plan view illustrating the same from the side opposite from the terminals according to embodiment 1 of the present invention;
FIGS. 3A, 3B and 3C are views showing the state in which a single coil wire is set to a zonation wave winding jig;
FIGS. 4A, 4B and 4C are views showing the zonation wave winding jig in which coil wires are wound around in a wave form;
FIGS. 5A, 5B and 5C are views showing the state in which a coil adhesion fairing jig is attached to the zonation wave winding jig;
FIGS. 6A, 6B and 6C are views showing the zonation wave winding coil inserted to the coil adhesion fairing jig;
FIGS. 7A, 7B and 7C are views showing the zonation wave winding coil subjected to adhesion fairing;
FIGS. 8A, 8B and 8C are view showing the state after performing adhesion fairing of the zonation wave winding coil;
FIGS. 9A and 9B are explanatory views for forming the zonation wave winding coil into a circularity wave winding coil;
FIGS. 10A, 10B and 10C are explanatory views showing the process for inserting the circularity wave winding coil to the stator core;
FIGS. 11A, 11B and 11C are views showing the parietal region of the zonation wave winding coil;
FIGS. 12A, 12B and 12C are views showing the parietal region of the zonation wave winding coil having been subjected to adhesion fairing;
FIGS. 13A, 13B and 13C are views showing the parietal regions of the circularity wave winding coils;
FIG. 14 shows coil ends of the zonation wave winding coils according to embodiment 1 of the present invention;
FIGS. 15A and 15B are explanatory views illustrating the state before and after inserting the circularity wave winding coils to the stator core slots;
FIGS. 16A and 16B illustrate the state in which the wave winding coils according to embodiment 1 of the present invention are assembled to the stator;
FIGS. 17A and 17B illustrate the state in which the wave winding coils according to embodiment 1 of the present invention are assembled to the stator with the terminals connected;
FIGS. 18A, 18B and 18C illustrate steps for assembling circularity wave winding coils to stator core slots according to embodiment 3 of the present invention;
FIGS. 19A and 19B illustrate a distributed winding stator according to embodiment 2 of the present invention;
FIGS. 20A and 20B are explanatory views of the first section prior to inserting the circularity wave winding coil to the stator core slots according to embodiment 3 of the present invention;
FIGS. 21A and 21B are explanatory views of the second section prior to inserting the circularity wave winding coil to the stator core slots according to embodiment 3 of the present invention; and
FIGS. 22A through 22F are explanatory views of the process for inserting the circularity wave winding coil to the stator core slots according to embodiment 3 of the present invention.

### DETAILED DESCRIPTION OF THE PREFERRED EMBODIMENTS

Now, the preferred embodiments of the present invention will be described with reference to the drawings.

### [Embodiment 1]

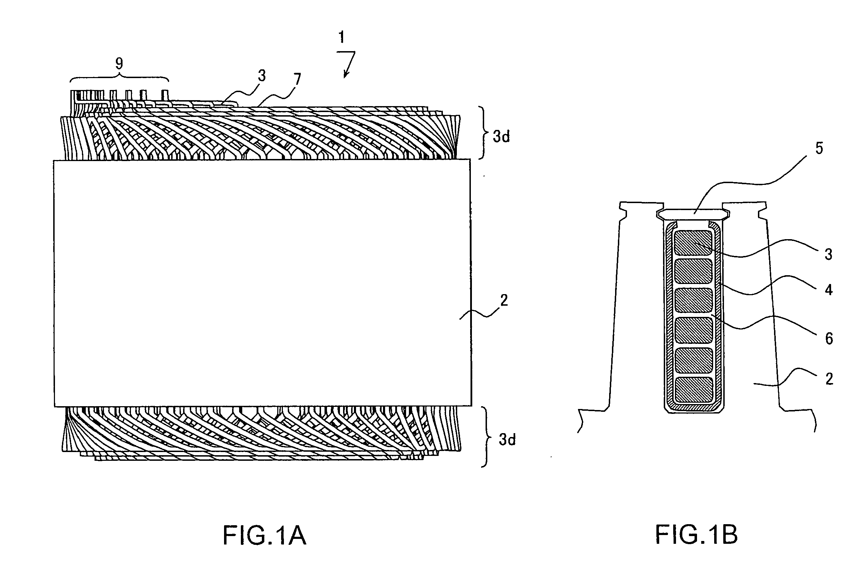

FIG. 1 shows a distributed winding stator 1 according to embodiment 1 of the present invention. FIG. 1A is a front view of the distributed winding stator 1 viewed from the side surface side of a stator core 2, wherein a circularity wave winding coil 7 having twelve coil source wires 3 formed in a circular wave form is assembled to a stator core 2, with the terminals 9 of the coil wires 3 connected. This arrangement enables to reduce the number of ends or number of connections, according to which the frequency of connection error is reduced and the yield is improved.

FIG. 1B is a cross-sectional view showing in enlarged view the inner portion of a stator core slot 6 of the stator core 2. The stator core 2 is formed by press-drawing a rolled steel plate with a thickness of approximately 1 mm and laminating the same. The coil source wire 3 is a conductor wire with insulating coating, and in the present embodiment, a copper conductor is coated with polyamide-imide resin. Coil source wires 3 coated with insulating material are arranged inside the stator core slots 6 of the stator core 2. Since the coil wires 3 are coated with insulating material 4, the insulating property thereof is improved. The insulating material 4 is provided as a coating so as to insulate pinholes that may exist by some chance in the enamel coating of the coil source wire 3 and to prevent damage to the enamel coating during assembly to the stator core. Furthermore, by placing a wedge 5 to the stator core 2, it becomes possible to prevent the coil source wires 3 from escaping from the slot 6. If the overall cross-sectional areas of the coil source wires 3 in the stator core slot 6 are the same, the magnetic flux density will become higher as the number of wires increases. According to the present invention, the coil wire 3 is a square wire with a substantially rectangular cross-section, wherein six square conductors are arranged along the axial direction within the stator core slots 6 of the stator core 2.

The magnetic flux density is increased, the current density is reduced, and the efficiency of the rotation electric machine is improved according to the present example having six square conductors arranged compared to the case where two flat rectangular conductors are arranged along the axial direction.

In the present specification, the portions of the coil source wires 3 coming out of the stator core, that is, the portions of the coil source wires 3 crossed over between a stator core slot and another stator core slot are defined as crossover conductor portions 3d.

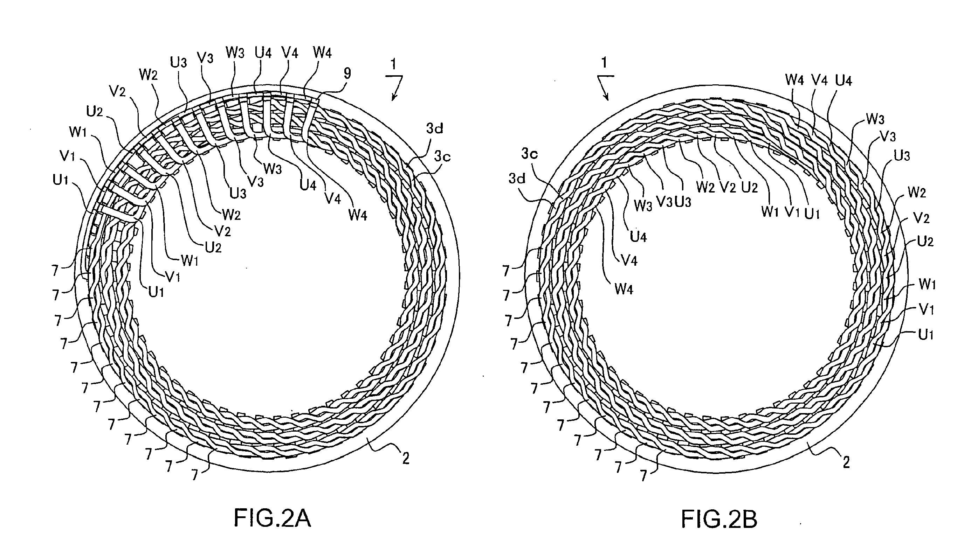

FIG. 2 shows a distributed winding stator 1 having twelve circularity wave winding coils 7 assembled to a stator core 2 with 48 slots. FIG. 2A shows a plan view of a distributed winding stator 1 seen from the side of the terminal portion 9. The rotation electric machine of the present invention is a three-phase coil having a U-phase, a V-phase and a W-phase. In the drawing, the outer circumference side of the core in the slot is the starting end of winding of the circularity wave winding coils 7, and the inner circumference side of the core in the slot is the coil end of the circularity wave winding coils, wherein the circularity wave winding coils 7 are assembled to the stator core 2 in the following order: U1, V1, W1, U2, V2, W2 and so on. Thereby, a three-phase distributed winding stator 1 having twenty-four coil terminal ends and twelve connections is obtained. The parietal region of each crossover conductor 3d has a cranked portion 3c, wherein the cranked shape enables to eliminate interference with adjacent coils and enables assembly.

FIG. 2B is a plan view of the distributed winding stator 1 seen from the side opposite from the terminal end portion. There is no connecting portion on the illustrated side, and twelve circularity wave winding coils 7 are assembled to the stator core 2 in the following order: U1, V1, W1, U2, V2, W2 and so on. The parietal region of each crossover conductor 3d also has a cranked portion 3c on the illustrated side opposite from the terminal end portion.

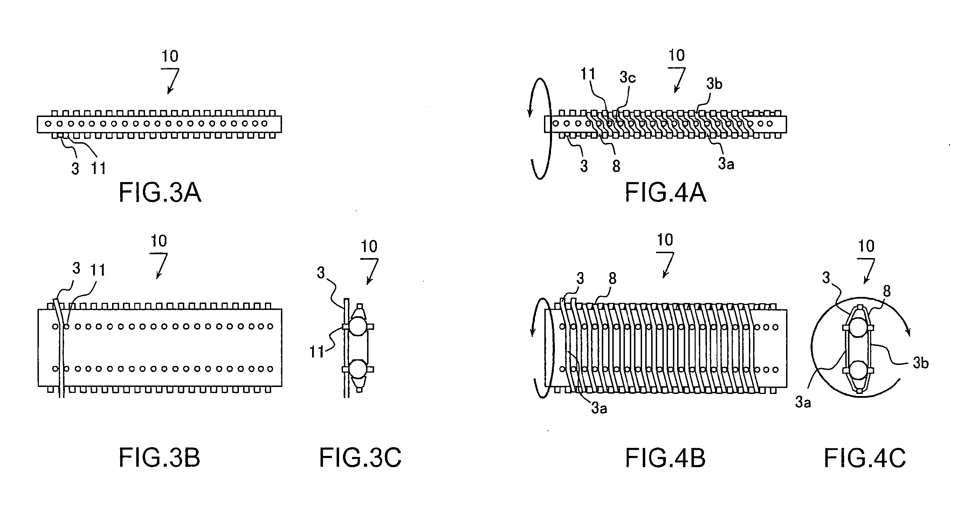

Now, the method for forming the distributed winding stator according to the present invention will be described with reference to FIGS. 3 through 10. For sake of explanation, the number of coil source wires being wound is reduced and the number of slots in the stator core is also reduced in the drawings of FIGS. 3 through 10.

FIG. 3 illustrates a zonation wave winding jig 10 for winding the coil source wire 3 in a wave form. FIGS. 3A through 3C illustrate a state in which a single coil source wire 3 is set to the zonation wave winding jig 10, wherein FIG. 3A is a plan view of the zonation wave winding jig 10, FIG. 3B is a front view of the zonation wave winding jig 10 and FIG. 3C is a side view of the zonation wave winding jig 10. The coil source wire 3 can be set to the predetermined position correctly via locating pins 11 provided on the zonation wave winding jig 10.

FIG. 4 illustrates a zonation wave winding jig 10 to which the coil source wire 3 is wound in a wave form. FIGS. 4A through 4C illustrate a state in which three coil wires 3 are wound around the zonation wave winding jig 10, wherein FIG. 4A is a plan view of the zonation wave winding jig 10, FIG. 4B is a front view of the zonation wave winding jig 10, and FIG. 4C is a side view of the zonation wave winding jig 10. The coil source wires 3 wound around the zonation wave winding jig 10 is wound in a wave form by rotating the zonation wave winding jig 10 and using the locating pins as guide, by which a zonation wave winding coil 8 having cranked portions 3c is formed. In the present specification, the side starting from the terminal on the starting end of the coil source wire 3 is defined as the outward conductor 3a, and the opposite side is defined as the homeward conductor 3b, as shown in FIGS. 4A and 4C.

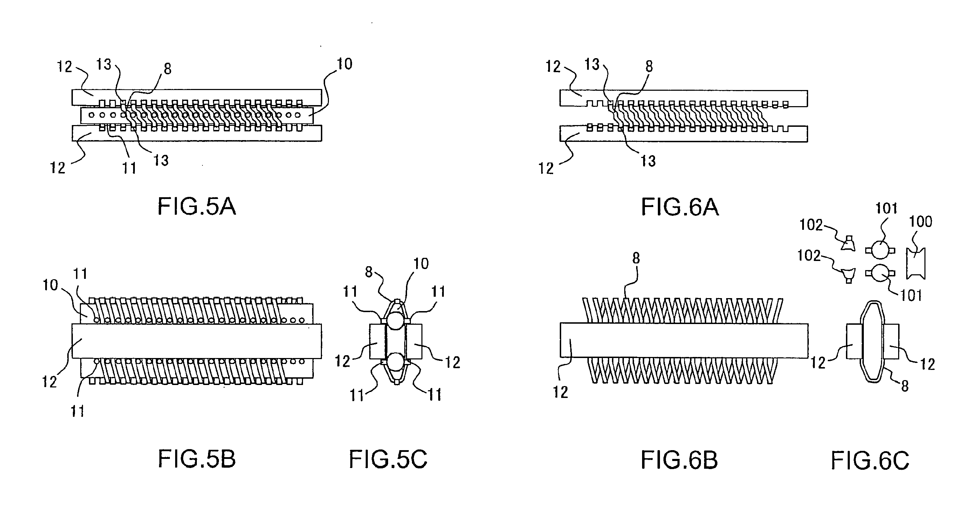

FIG. 5 illustrates a coil adhesion fairing jig 12 attached to the zonation wave winding jig 10. FIGS. 5A through 5C illustrate the state in which the coil adhesion fairing jig 12 is attached to the zonation wave winding jig 10 having a zonation wave winding coil 8 formed thereto, wherein FIG. 5A is a plan view of the zonation wave winding jig 10 and the adhesion fairing jig 12. The coil adhesion fairing jig 12 has chases 13 formed at positions for receiving the formed zonation wave winding coil 8. FIG. 5B is a front view of the zonation wave winding jig 10 and the adhesion fairing jig 12, and FIG. 5C is a side view of the zonation wave winding jig 10 and the coil adhesion fairing jig 12. The coil adhesion fairing jig 12 is designed so as not to interfere with the locating pins 11 attached to the zonation wave winding jig 10.

FIG. 6 illustrates the formed zonation wave winding coil 8 attached to the coil adhesion fairing jig 12. FIGS. 6A through 6C illustrate a state in which the zonation wave winding jig is removed. FIG. 6A is a plan view of the adhesion fairing jig 12 and FIG. 6B is a front view of the adhesion fairing jig 12, wherein the shaped zonation wave winding coil 8 is received in the chases 13 of the adhesion fairing jig 12 without being parted. FIG. 6C is a side view of the adhesion fairing jig 12 and the disassembled and removed zonation wave winding jig. The zonation wave winding jig is composed of major jigs including a wave winding jig cored bar 100, wave winding jig side retention members 101 and wave winding jig side retention members 102. The wave winding jig can be disassembled and removed in the following order; the wave winding jig cored bar 100, the wave winding jig side retention members 101, and the wave winding jig side retention members 102.

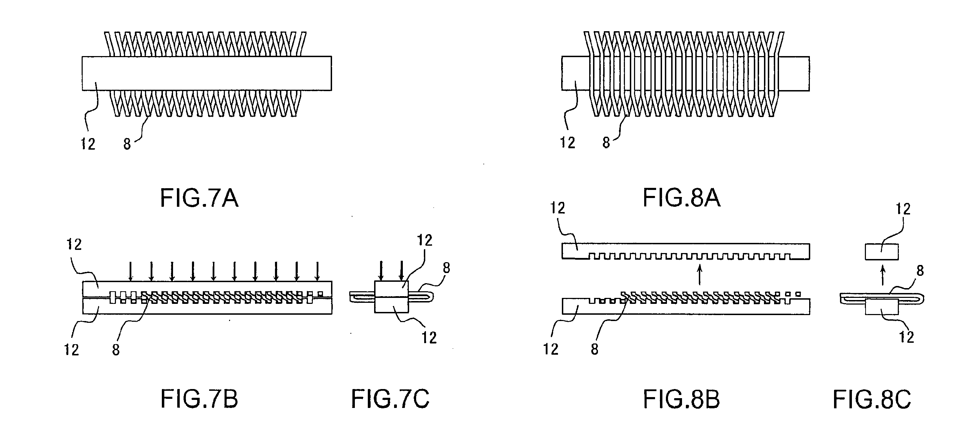

FIG. 7 illustrates a state in which the zonation wave winding coil 8. is subjected to adhesion fairing using the coil adhesion fairing jig 12. FIG. 7A is a front view of the adhesion fairing jig 12, FIG. 7B is a plan view of the adhesion fairing jig 12 and FIG. 7C is a side view of the adhesion fairing jig 12, wherein the adhesion fairing jigs 12 are moved in the direction of the arrow and put together so as to closely adhere the zonation wave winding coil 8.

FIG. 8 illustrates the state after subjecting the zonation wave winding coil 8 to adhesion fairing. FIG. 8A is a front view of the adhesion fairing jig 12, FIG. 8B is a plan view of the adhesion fairing jig 12, and FIG. 8C is a side view of the adhesion fairing jig 12, wherein by moving the adhesion fairing jig 12 in the direction of the arrow and opening the jig, an adhered zonation wave winding coil 8 is obtained. Actually, since there is a clearance between the jig and the coil, and due to spring back of the shaped coil after opening the jig, the coil is not completely adhered.

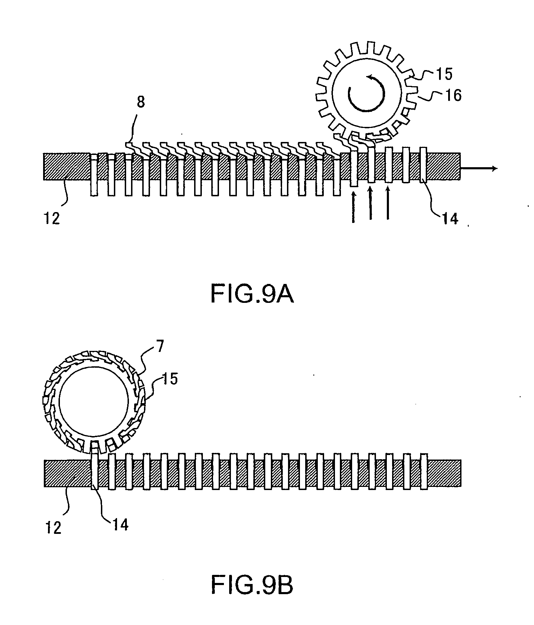

FIG. 9 illustrates the process of forming the zonation wave winding coil 8 into a circularity wave winding coil 7. FIG. 9A shows the state in which the zonation wave winding coil 8 is started to be rolled up via a circularity wave winding jig 15. The adhesion fairing jig 12 used previously has extrusion pins 14, and the zonation wave winding jig 15 has chases 16. Simultaneously as moving the adhesion fairing jig 12 in the right direction in the drawing, the circularity wave winding jig 15 is rotated and the extrusion pins 14 are pushed up sequentially to insert the zonation wave winding coil 8 sequentially into the chases 16 of the circularity wave winding jig 15. FIG. 9B shows a state in which the zonation wave winding coil is wound around the circularity wave winding jig 15 to form a circularity wave winding coil 7. At a position where the movement of the adhesion fairing jig 12 and the rotation of the circularity wave winding jig 15 ends, the coil is wound around the circularity wave winding jig 15 and a circularity wave winding coil 7 is obtained.

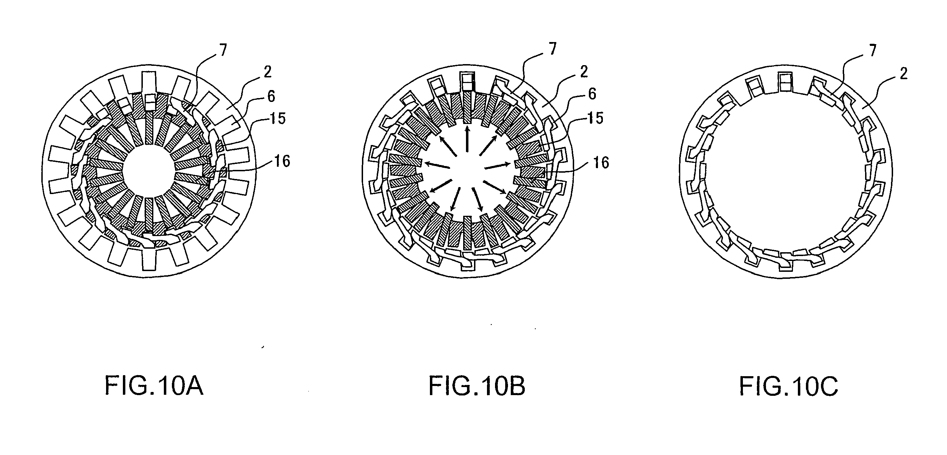

FIG. 10 illustrates a process for inserting the circularity wave winding coil 7 to the stator core 2. FIG. 10A illustrates a state in which the circularity wave winding jig 15 is set to the stator core 2. The circularity wave winding jig 15 to which the circularity wave winding coil 7 is wound around has extrusion pins 16 that move in the radial direction at positions corresponding to stator core slots 6. FIG. 10B illustrates a state in which the circularity wave winding coil 7 is inserted to the stator core slots 6 of the stator core 2. By moving the extrusion pins 16 toward the outer side from the inner side of the stator core 2, the circularity wave winding coil 7 is extruded by the circularity wave winding jig 15 and inserted to the stator core slots 6 of the stator core 2. FIG. 10C illustrates a stator core 2 having the circularity wave winding coil 7 inserted thereto. By removing the circularity wave winding jig, a stator core 2 having the circularity wave winding coil 7 inserted thereto can be obtained.

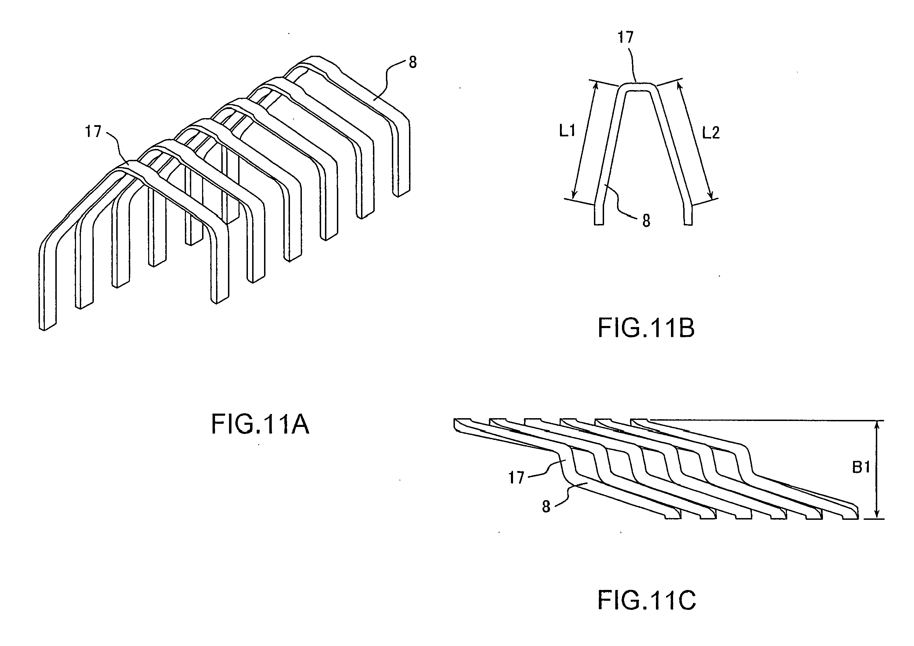

Next, with reference to FIGS. 11 through 13, we will describe how the coil is deformed. For sake of explanation, a portion of the six coil source wires is illustrated in FIGS. 11 through 13. FIG. 11 illustrates the parietal region 17 of the zonation wave winding coil 8 having the coil source wires wound around the zonation wave winding jig, wherein FIG. 11A is a perspective view, FIG. 11B is a side view, and FIG. 11C is a plan view seen from the side of the parietal region 17. As shown in FIG. 11B, the left and right sides of the wire below the parietal region 17 have different lengths, wherein L2 is longer than L1. Upon inserting the coil to the stator core, the length of the outer circumference side must be longer, so that the side having the length L2 is positioned on the outer circumference side when forming the coil into a circularity coil. Further, as shown in FIG. 11B, the substantial thickness of the zonation wave winding coil 8 has a size B1 that depends on the zonation wave winding jig.

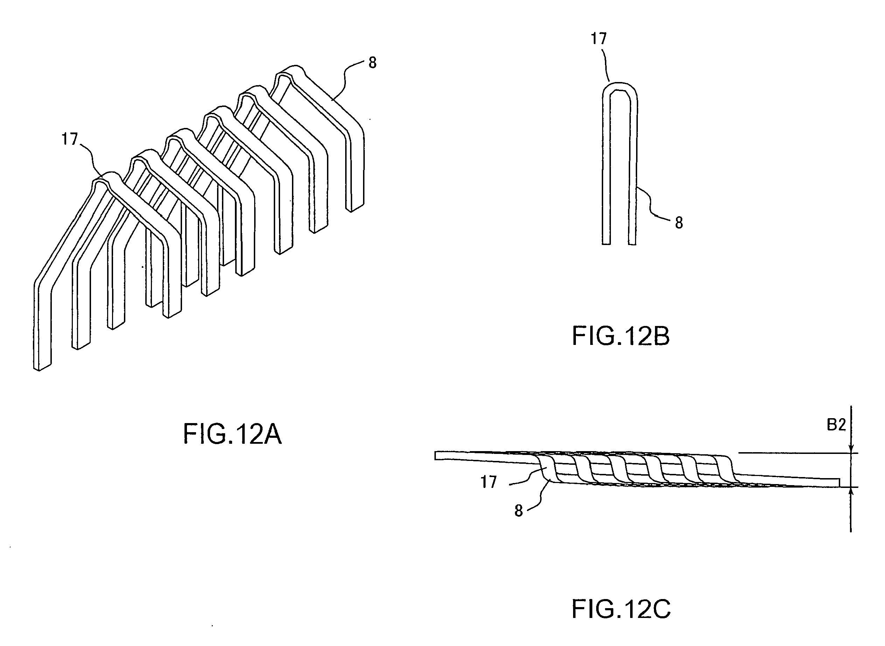

FIG. 12 illustrates the parietal region 17 of the zonation wave winding coil 8 having been shaped by the coil adhesion fairing jig, wherein FIG. 12A is a perspective view, FIG. 12B is a side view, and FIG. 12C is a plan view seen from the side of the parietal region 17. As shown in FIG. 12C, by shaping the coil using the coil adhesion fairing jig, the substantial thickness of the zonation wave winding coil 8 can be made as thin as dimension B2.

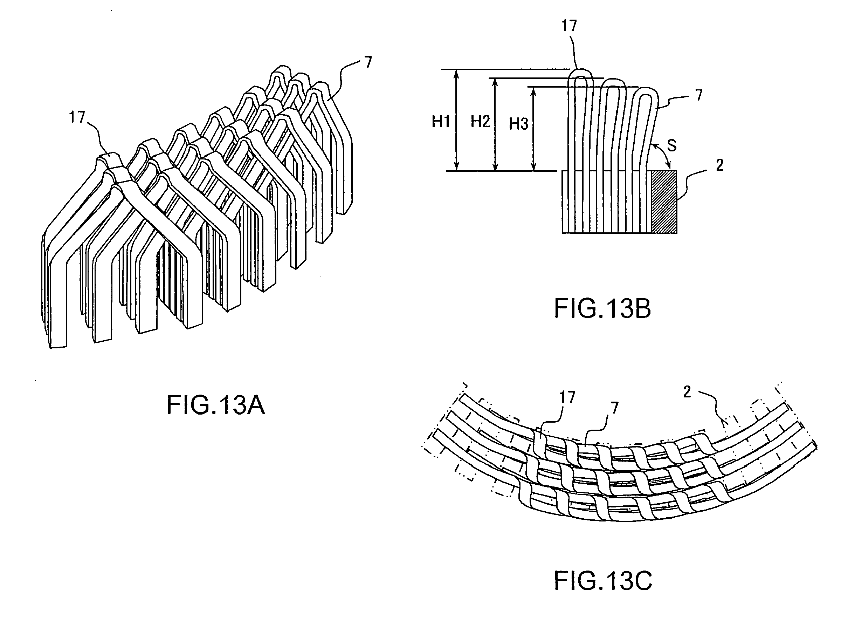

FIG. 13 illustrates the parietal region 17 of the circularity wave winding coil 7 inserted to the stator core, wherein FIG. 13A is a perspective view, FIG. 13B is a side view, and FIG. 13C is a plan view seen from the side of the parietal region 17. The two dot chain line of FIG. 13C shows the outline of the stator core 2. As shown in FIG. 13B, the heights of the parietal regions 17 from the end of the stator core 2 are varied, wherein the innermost circumference portion has a height H1, the intermediate portion has a height H2, and the outermost circumference portion has a height H3, the height being highest at H1 and lowest at H3. Furthermore, the circularitywave winding coil 7 is formed with an angle S, wherein the outermost circumference portion is most tilted. This arrangement prevents coil contact at the parietal regions, and therefore, the circularity wave winding coil 7 can be inserted to the stator core 2.

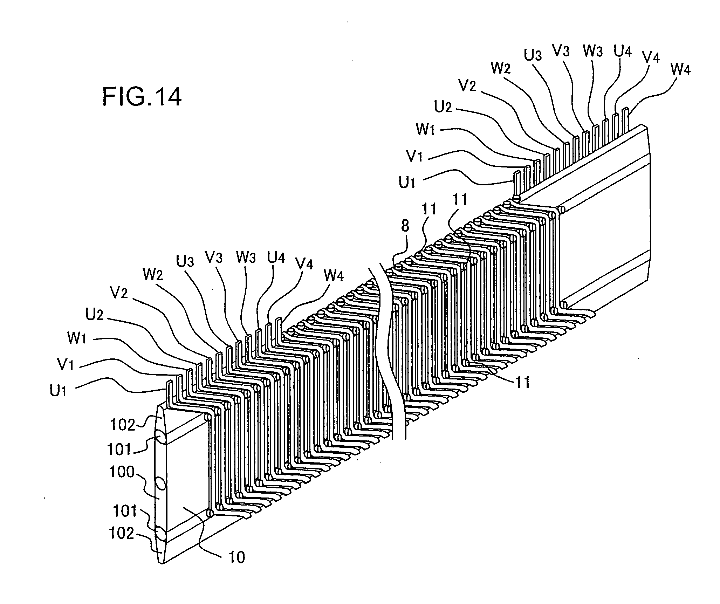

FIG. 14 is a perspective view showing the state in which twelve coil wires 3 are wound around the zonation wave winding jig 10. The zonation wave winding jig 10 is composed of major jigs including the wave winding jig cored bar100, thewavewinding jig side retention members 101 and wave winding jig side retention members 102. After winding the coil source wires 3 to the zonation wave winding jig 10 so that they pass the predetermined positions between locating pins 11 in the named order of U1, V1, W1, U2, V2, W2 and so on, the wave winding jig cored bar 100, the wave winding jig side retention members 101 and the wave winding jig side retention members 102 are sequentially removed in the named order so as to obtain twelve zonation wave winding coils. The locating pins 11 are arranged so that the wave winding coils can be inserted to predetermined positions of the stator core slots.

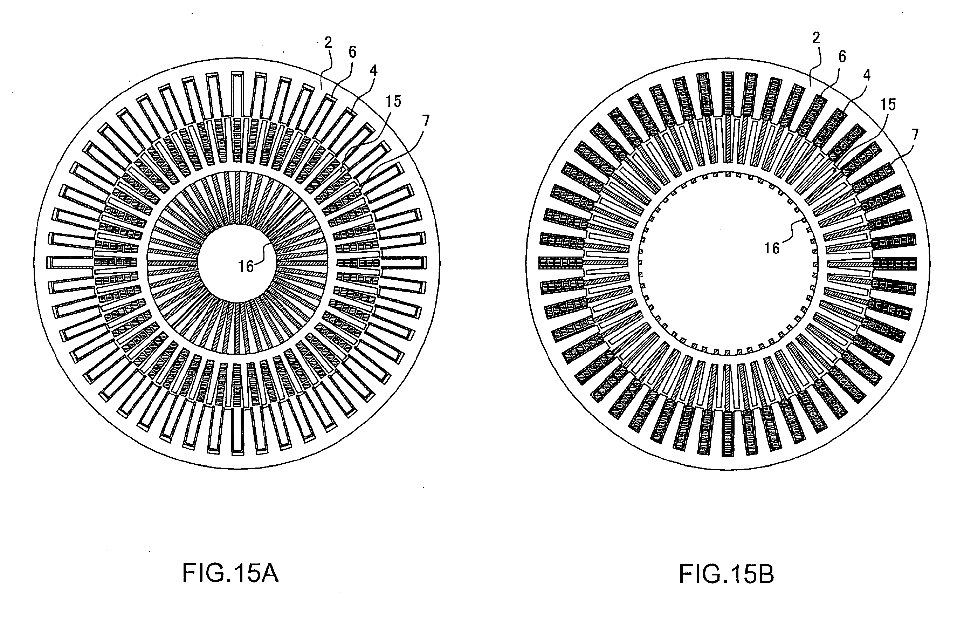

FIG. 15 illustrates the state before and after inserting the twelve circularity wave winding coils 7 to the stator core 2 having forty-eight slots. FIG. 15A illustrates a state in which the circularity wave winding jig 15 is set to the stator core 2. The circularity wave winding jig 15 having the circularity wave winding coils 7 wound therearound has extrusion pins 16 that move in the radial direction arranged at positions facing the stator core slots 6. Further, insulating members 4 are inserted to the stator core slots 6. FIG. 15B illustrates a state in which the circularity wave winding coils 7 are inserted to the stator core slots 6 of the stator core 2. By moving the extrusion pins 16 from the inner side toward the outer side of the stator core 2, the circularitywave winding coils 7 are pushed outward via the circularity wave winding jig 15 and inserted to the stator core slots 6 of the stator core 2. By removing the circularity wave winding jig, it becomes possible to obtain a stator core 2 having forty-eight slots with six turns per slot.

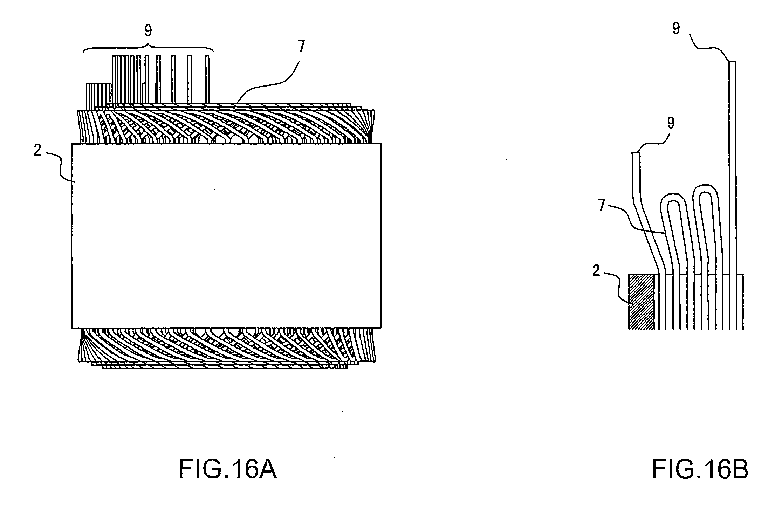

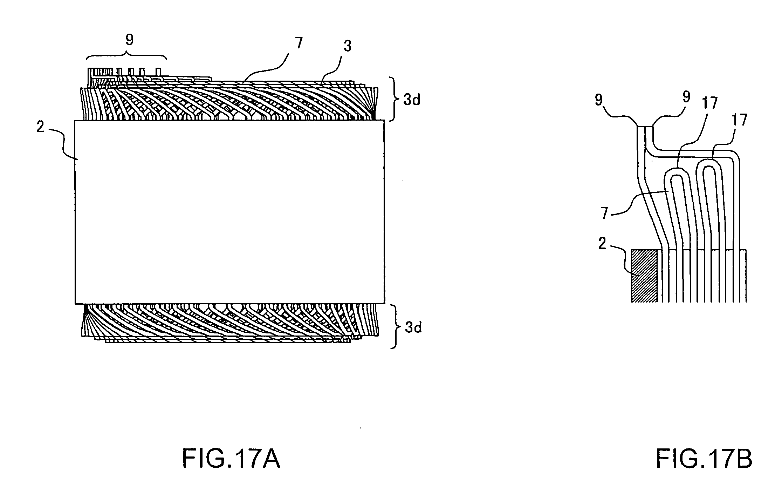

The process of connecting the terminal ends 9 of the circularity wave winding coils 7 inserted to the stator core 2 will now be described with reference to FIGS. 16 and 17.

FIG. 16A shows a view of the stator core 2 in which the circularity wave winding coil 7 is inserted, taken from the side portion of the stator core 2. FIG. 16B is a schematic cross-sectional view of the area near the terminal portion 9 showing the shape of the circularity wave winding coil 7 in the radial direction of the stator core 2. As for the distance from the end of the stator core 2 to the terminal portion 9, the ends arranged at the inner circumference side of the stator core 2 is formed longer.

FIG. 17 illustrates a state in which the terminal portion 9 at the inner circumference side of the stator core 2 is bent and formed, so that the terminal portion at the outer circumference side of the stator core 2 is connected with the terminal portion at the inner circumference side thereof. FIG. 17A shows a drawing seen from the side surface of the stator core 2, and FIG. 16B is a schematic cross-sectional view of the area near the terminal portion 9 showing the shape of the circularity wave winding coil 7 in the radial direction of the stator core 2 . The terminal portion 9 on the inner circumference side of the core having been bent and formed is crossed over the parietal region 17 and directly connected with the terminal portion 9 on the outer circumference side, and no other components are attached thereto. The preferred embodiment described herein has twelve circularity wave winding coils formed to constitute a continuous three-layer structure, wherein six conductors are arranged in a single slot.

### [Embodiment 2]

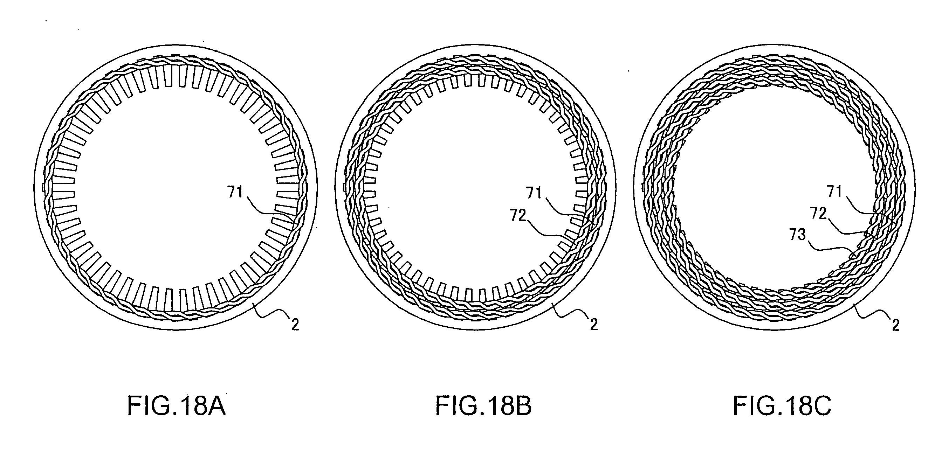

FIG. 18 is a view showing the process for assembling a circularity wave winding coil to a core according to another embodiment of the present invention, or embodiment 2. FIG. 18A illustrates a state in which a first layer of circularity wave winding coil 71 is assembled to a stator core 2, FIG. 18B illustrates a state in which a second layer of circularity wave winding coil 72 is assembled to the stator core, and FIG. 18C illustrates a state in which a third layer of circularity wave winding coil 73 is assembled to the stator core, wherein the drawings are shown from the side opposite from the terminal portions. According to this arrangement, three layers of coils, each layer composed of twelve circularity wave winding coils, are assembled to the core, with six conductors arranged in a single slot.

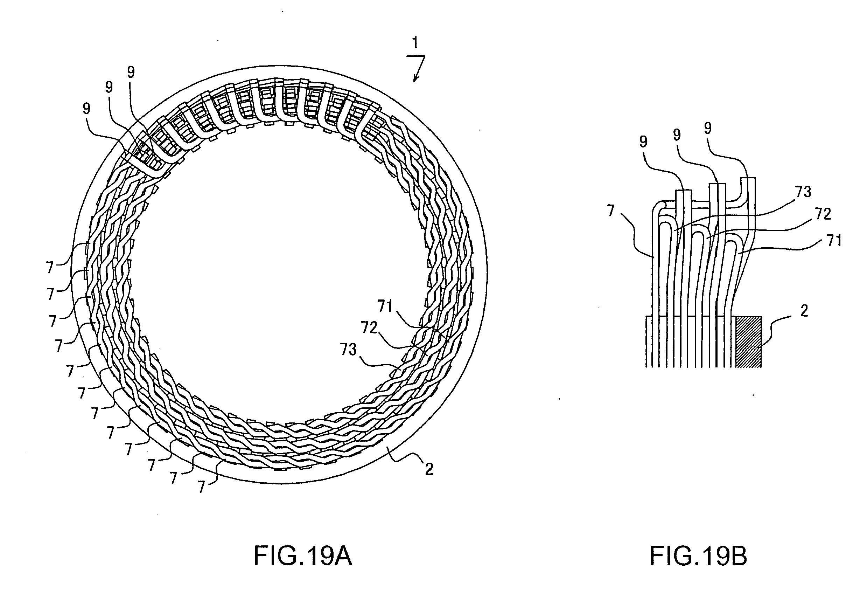

FIG. 19 illustrates a state in which the terminals are connected. FIG. 19A illustrates a state in which circularity wave winding coils 71, 72 and 73 are assembled to the stator core 2 viewed from the side having terminal portions 9, and FIG. 19B is a schematic cross-sectional view of the terminal portions 9. One of the terminal portions 9 of the first layer of circularity wave winding coil 71 is connected to the second layer of circularity wave winding coil 72, and the other one of the terminal portions 9 of the first layer is connected to the terminal portion of the third layer of circularity wave winding coil 73. Similarly, the other one of the terminal portions 9 of the second layer of circularity wave winding coil 72 is connected to the terminal portion of the third layer of circularity wave winding coil 73. Thus, a distributed winding stator 1 in which six conductors are arranged in a single slot is obtained.

### [Embodiment 3]

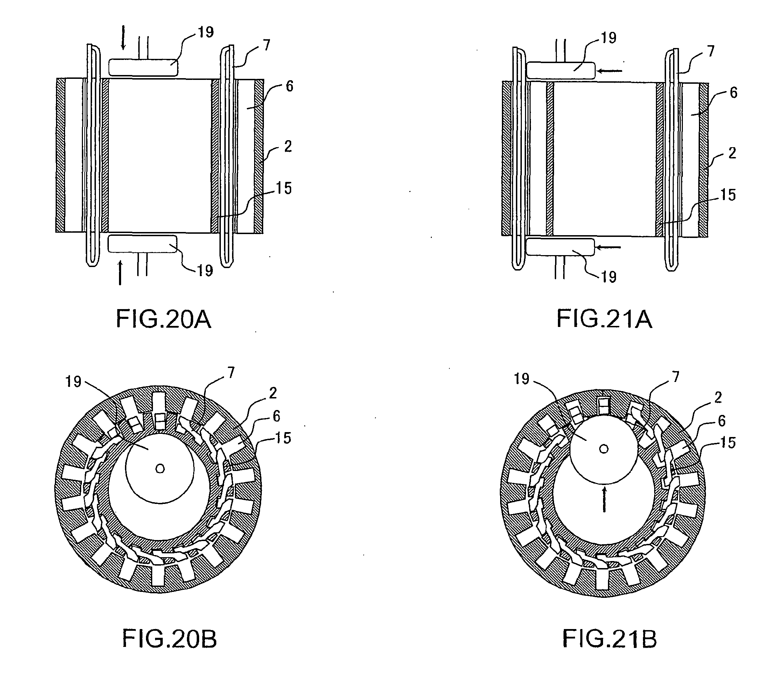

The process for inserting the circularity wave winding coil 7 in the stator core 2 has been described with reference to FIG. 10. Now, another inserting process according to embodiment 3 of the present invention will be described with reference to FIGS. 20 through 22.

FIG. 20 illustrates a state in which a circularity wave winding jig 15 having wound the circularity wave winding coil 7 is set to a stator core 2, wherein FIG. 20A is an axial cross-sectional view of the stator core 2, and FIG. 20B is a view showing the stator core 7 from the terminal side. As shown in FIG. 20A, rollers 19 are set to upper and lower ends of the stator core 7.

FIG. 21 illustrates a state in which the upper and lower rollers 19 are moved in the outer side in the radial direction, wherein FIG. 21A is an axial cross-sectional view of the stator core 2, and FIG. 21B is a view showing the stator core 7 from the terminal side. Since the upper and lower rollers 19 are moved in the outer side in the radial direction, the circularity wave winding coil 7 near the area where the rollers 19 are pressed is inserted to the stator core slot 6 of the stator core 2.

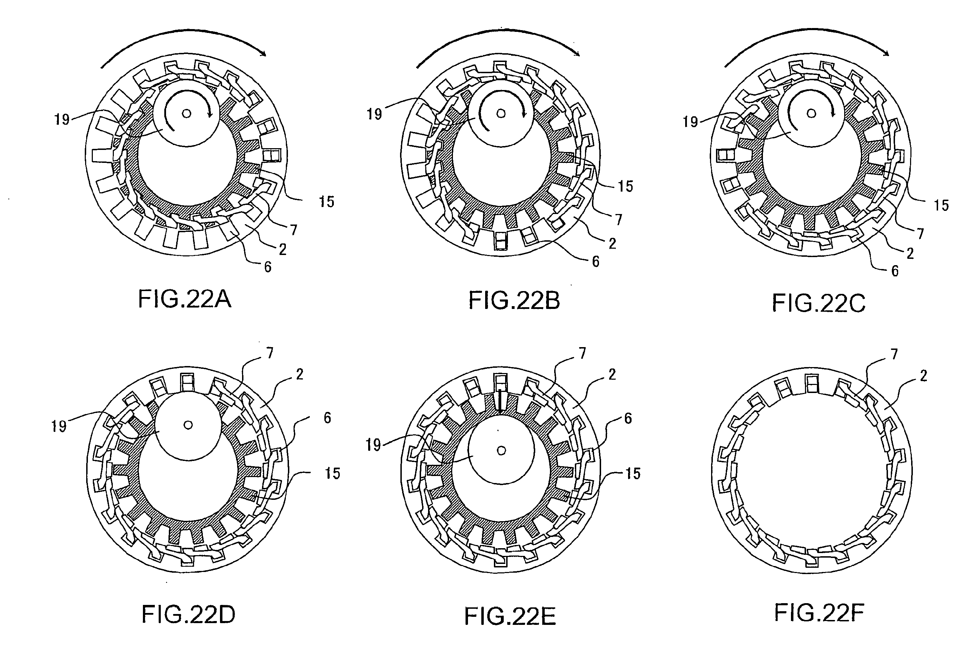

FIG. 22 illustrates a view of the stator core 7 seen from the end surface side. As shown in FIGS. 22A, 22B and 22C in the named order, by rotating the stator core 2 and the circularity wave winding jig 15 with the roller 19 pressed against the circularity wave winding coil 7, the roller 19 rotates in a rolling motion, and the circularity wave winding coils 7 are sequentially inserted to the stator core slots 6 of the stator core 2. FIG. 22D illustrates a state in which the stator core 2 and the circularity wave winding jig 15 has gone around in a circle so that circularity wave winding coils 7 are inserted to all the slots.

Next, as shown in FIG. 22E, the roller 19 is moved to the radial inward direction, where the roller 19 and the circularity wave winding jig 15 is removed so as to obtain a stator core 2 having a circularity wave winding coil 7 inserted thereto as shown in FIG. 22F.

## Claims

1. A rotation electric machine having a stator, comprising a coil conductor subjected to wave winding having phases including a slot conductor portion composed of an outward conductor portion and a homeward conductor portion alternately inserted to respective slots of the core and a crossover conductor portion where a same side end portion of the outward conductor portion and the homeward conductor portion-continuously constitute a coil end; and cranked portions formed at substantial parietal regions of the crossover conductor portion.

2. The rotation electric machine having a stator according to claim 1, wherein the cross-section of the coil conductor is substantially rectangular.

3. The rotation electric machine having a stator according to claim 1, wherein one end of a terminal of the coil conductor is located at an outermost circumference side of the slots of the stator core and the other end is located at an innermost circumference side of the slots of the stator core, and wherein the coil conductor is a continuous conductor without connected portions between the terminals.

4. The rotation electric machine having a stator according to claim 1, wherein one end of a terminal of the coil conductor is located at an outermost circumference side of the slots of the stator core and the other end is located at an innermost circumference side of the slots of the stator core, and having electrically connected portions between the terminals.

5. A distributed winding stator of a rotation electric machine, comprising a coil conductor subjected to wave winding having phases including a slot conductor portion composed of an outward conductor portion and a homeward conductor portion alternately inserted to respective slots of the core and a crossover conductor portion where a same side end portion of the outward conductor portion and the homeward conductor portion continuously constitute a coil end; and cranked portions formed at substantial parietal regions of the crossover conductor portion.

6. The distributed winding stator of a rotation electric machine according to claim 5, wherein the cross-section of the coil conductor is substantially rectangular.

7. The distributed winding stator of a rotation electric machine according to claim 5, wherein one of the terminals of the coil conductor is located at an outermost circumference side of the slots of the stator core and the other terminal is located at an innermost circumference side of the slots of the stator core, and wherein the coil conductor is a continuous conductor without connected portions between the terminals.

8. The distributed winding stator of a rotation electric machine according to claim 5, wherein one of the terminals of the coil conductor is located at an outermost circumference side of the slots of the stator core and the other terminal is located at an innermost circumference side of the slots of the stator core, and having electrically connected portions between the terminals.

9. A method for forming a distributed winding stator comprising a coil conductor subjected to wave winding having phases including a slot conductor portion composed of an outward conductor portion and a homeward conductor portion alternately inserted to respective slots of the core and a crossover conductor portion where a same side end portion of the outward conductor portion and the homeward conductor portion continuously constitute a coil end, having cranked portions formed at substantial parietal regions of the crossover conductor portion, the method comprising:
continuously wave winding a plurality of conductors, circularly forming the wave winding conductor, and inserting the plurality of wave winding circularly-formed conductors into respective slots of the stator core from an inner side of the stator core.

10. An apparatus for forming a distributed winding stator comprising a coil conductor subjected to wave winding having phases including a slot conductor portion composed of an outward conductor portion and a homeward conductor portion alternately inserted to respective slots of the core and a crossover conductor portion where a same side end portion of the outward conductor portion and the homeward conductor portion continuously constitute a coil end, having cranked portions formed at substantial parietal regions of the crossover conductor portion, the apparatus comprising:
a jig for continuously wave winding a plurality of conductors, a jig for circularly forming the wave winding conductor, and a jig for inserting the plurality of wave winding circularly-formed conductors into respective slots of the stator core from an inner side of the stator core.
